# EUROPEAN PATENT APPLICATION

(11) **EP 2 085 365 A1**
(43) Date of publication of application: **05.08.2009**
(21) Application number: 08101219.7
(22) Date of filing: 01.02.2008
(51) Int. Cl.: C03C 25/14, D04H 1/64

(54) **Method of producing a bonded mineral fibre product**

(71) Applicant: Rockwool International A/S, 2460 Hedehusene (DK)
(72) Inventor: Hansen, Erling, Lennarth, 2820 Gentofte (DK); Nissen, Povl, 3650 Olstykke (DK)
(74) Representative: Barz, Peter

(57) **Abstract**

A bonded mineral fibre product is produced by a method which comprises: fiberizing a mineral melt; carrying the mineral fibres formed by means of a gas stream into a forming chamber; applying a thermosetting binder on to the mineral fibres; depositing the coated fibres as a mineral fibre web on a receiver means; and transferring the mineral fibre web to a curing oven for curing of the binder and forming a bonded mineral fibre product; the method being characterized by separately applying a main binder and at least one co-binder on to the mineral fibres, the T-onset temperature (temperature at which curing starts) of the co-binder being at least 10°C lower than the T-onset temperature of the main binder, and the ion viscosity of the co-binder at the T-onset temperature of the main binder being higher than that of the main binder.

## Description

### Field of the Invention

The present invention relates to a method of producing a bonded mineral fibre product, in particular a bonded mineral fibre product for use as thermal and/or acoustical insulation material.

### Background of the Invention

Mineral fibre products generally comprise man-made vitreous fibres (MMVF) such as, e.g., glass fibres, ceramic fibres, basalt fibres, slag wool, mineral wool and stone wool, which are bonded together by a cured thermosetting polymeric binder material.

Generally mineral wool products are manufactured by melting a suitable mineral raw material in a melting apparatus, such as a cupola furnace, from which the melted material is continuously supplied to a fibre-forming apparatus. In said fibre-forming apparatus, the melted material is transformed into mineral fibres, for instance, by a spinning cup process or by a cascade rotor process. The formed mineral fibres are carried by means of an air or gas stream into a forming chamber and, while airborne and while still hot, are sprayed with a binder solution and deposited on a receiver means, for instance, a perforated conveyor, in the form of a continuous mat or web of randomly distributed mineral fibres. The mineral fibre mat is then transferred to a curing oven where hot air is blown through the mat to cure the binder and rigidly bond the mineral fibres together.

In the so-called cascade rotor process, the fibre-forming apparatus comprises rapidly rotating steel cylinders, called spinning wheels, which are arranged to successively receive the melted material and to throw it on to the next spinning wheel. There are generally 2 to 4 spinning wheels in the cascade spinning apparatus.

In the manufacture of glass wool, conventional glass raw materials are usually melted in a tank furnace. In the most common fibre-forming method for glass wool, the melted material is allowed to flow into hollow centrifuges which are mounted for rotation about vertical shafts. There are holes in the jacket of the centrifuges and the melted glass is by the centrifugal force pressed out through said holes thereby forming thin mineral strings, called primary fibres. The actual fibre-forming is thereafter accomplished by means of strong axially directed gas or air jets which flow past the jackets of the centrifuges.

Also in the production of stone or slag mineral wool, air flows are supplied around the spinning wheels for several reasons, for instance, in order to carry the fibres away from the actual fibre-forming apparatus into the forming chamber where they deposit on the receiver means.

Addition of the binder must be carried out under conditions that allow the binder to be uniformly distributed over the fibres. In particular, it is necessary to prevent the formation of fibre bundles, these being dispersed within non-bonded fibres that are liable to easily break and thereby generate dust. This operation aims at retaining fibres that are bonded together by junction points that are sufficiently strong to ensure good cohesion and to ensure that the product does not tear when used. However, the cohesion must not be too high, so that the bonding remains flexible and the final product retains a certain deformability. In particular, the junctions between the fibres must provide a network that is stable and rigid enough to withstand the compression imposed by storing and transporting the product, and must meet the supplier's specifications when the product is being used.

In commercial processes for the manufacture of mineral wool products, the fibres, just formed, are suspended in the air or gas stream which carries them from the fibre-forming apparatus to the receiver means, and the binder to be added to the mineral fibres is sprayed in a finely dispersed form on to said suspended fibres. Other substances may be supplied in combination with the binder, for instance, a wetting agent or a dust binding substance. Normally, the binder is supplied very close to the fibre-forming apparatus. The reason for applying the binder to the suspended fibres, and not to the mat already formed on the receiving conveyor is that it is difficult to have the binder penetrate into a mineral wool mat since such mats are tight and the fibres have a fine structure compared to the size of the binder drops.

Regarding the receiver means, there are basically two different principles for the function thereof. According to one principle, a final mat is built up on the conveyor of the receiver means, and said final mat is then further processed (cured, cooled, divided, cross cut, etc.).Technically, this means that the area weight of the mineral wool as initially deposited on the perforated conveyor is the same as the intended area weight of the final product.

In many cases, a second principle gives a better result, and according to this principle a relatively thin mat, a so called primary mat, is first deposited, and said primary mat is then, by a folding process, in one or more steps, processed so as to build up a final mineral wool mat, the area weight of which corresponds to intended area weight of the final product.

The web of mineral fibres spray-coated with the binder is subsequently heat-treated at a temperature generally above 100°C in order to cross-link the binder resin and thereby obtain a cured bonded mineral fibre product having the properties required for forming a thermal and/or acoustic insulation material, especially in terms of dimensional stability, tensile strength, thickness recovery after compression and uniform color.

Curing of the mineral fibre web may be carried out in a curing oven by introducing a hot-air stream into the mineral fibre web. However, at the entrance of the curing oven where the uncured and thus soft mineral fibre web is introduced into the oven, there often occurs the problem that the hot-air stream may be of a magnitude that holes or depressions are formed in the mineral fibre web (so-called "hollow-blowing"). As curing takes place along the length of the curing oven, the problem decreases in importance because the stiffness increases and the web gains resistance against the air pressure. The problem is especially pronounced in the curing of light products which have a higher tendency for hollow-blowing due to their low density and hence ease of compressibility.

One way to solve the problem would of course be to lower the air pressure. However, this may leave part of the product semi-cured or will reduce the production capacity and is therefore unsuited. The curing oven has a fixed length and a minimum speed, i.e. there is a maximum curing time limit within which the curing has to take place.

### Summary of the Invention

The present invention offers the possibility of avoiding or reducing the problems associated with "hollow-blowing" in the curing step of a continuous process for manufacturing bonded mineral fibre products thereby improving curing quality and production capacity.

In accordance with the present invention there is provided a method of producing a bonded mineral fibre product which comprises:
fiberizing a mineral melt;
carrying the mineral fibres formed by means of a gas stream into a forming chamber;
applying a thermosetting binder on to the mineral fibres;
depositing the coated fibres as a mineral fibre web on a receiver means; and
transferring the mineral fibre web to a curing oven for curing of the binder and forming a bonded mineral fibre product;
the method being characterized by separately applying a main binder and at least one co-binder on to the mineral fibres, the T-onset temperature (temperature at which curing starts) of the co-binder being at least 10°C lower than the T-onset temperature of the main binder, and the ion viscosity of the co- binder at the T-onset temperature of the main binder being higher than that of the main binder.

By applying one or more co-binders having a lower T-onset temperature than the main binder, strength is fast built up in the mineral fibre web upon introduction into the curing oven, thereby preventing the occurrence of hollow-blowing in the non-cured or partly cured sections and improving curing quality and curing rate. This allows to use air pressures that would normally cause hollow-blowing which, in turn, increases production capacity.

The T-onset temperature is an important parameter as this is the temperature at which the binder in general has its lowest stiffness. In a one-binder system, the mineral fibre web is most vulnerable to hollow-blowing at the T-onset temperature of the binder because it has its lowest stiffness at his temperature. The combination of main binder and co-binder provides adequate stiffness of the mineral fibre web, since the ion viscosity and hence the stiffness of the co-binder at the T-onset temperature of the main binder is required to be higher than that of the main binder, the co-binder is able provide the necessary stiffness where the main binder fails.

In a preferred embodiment of the method according to the present invention, the co-binder has at least the same curing rate as the main binder and, preferably, a higher curing rate than the main binder. A high curing rate will quickly impart stiffness to the product, especially in the bottom part of the mineral wool web facing the hot air stream.

The amount of co-binder, based on solids, generally is within the range of from 1 to 50 weight percent of total binder, preferably from 5 to 30 weight percent of total binder comprising main and co-binder.

The T-onset temperature and the ion viscosity of the main binder and the co-binder are determined by dielectric analysis, often abbreviated as DEA. Dielectric Cure Monitoring and Dielectric Analysis (DEA) are techniques for investigating the processing behaviour and physical and chemical structure of thermosetting resins and other polymers by measuring the changes in dielectric properties of the material. For instance, DEA may be used to analyse the T-onset temperature, the curing rate and the degree of cure of a binder resin. For DEA measurements, often equipment provided by NETSCH Gerätebau GmbH of Selb, Germany, is employed (see www.netzsch-thermal-analysis.com)

In a typical test, the sample is placed in contact with electrodes (the dielectric sensor) and a sinusoidal voltage (the excitation) having a certain frequency is applied. The resulting sinusoidal current (the response) is measured. The response signal is attenuated in amplitude and shift in phase in relation to the mobility of the ions and alignment of dipoles. Dipoles in the material will attempt to align with the electric field and charged ions will move toward the electrode of opposite polarity. Determining the changes in the dielectric properties of the sample as a function of time or temperature (as detailed in ASTM E 2038 or E 2039) provides the necessary information about T-onset temperature and ion viscosity. The ion viscosity is related to the viscosity of the resin before gelation and to rigidity after gelation. At first, the viscosity decreases as the resin is melted, i.e. the mobility of the ions is increasing. When the resin starts curing, the viscosity is increasing, i.e. the mobility of the ions is decreased, and viscosity increases as curing proceeds. From the curve obtained in a DEA experiment at a frequency of 3000 Hz, the temperature at which curing starts (T-onset) may be taken. T-onset is the temperature at which the ion viscosity has its minimum (= maximum flow). This is often referred to as the gel temperature as immediately after this point viscosity increases and gelation occurs. The slope of the curve during gelation indicates the curing speed. For more details, see Dielectric Analysis & Dielectric Cure Monitoring at www.ngb.netzsch.com.

The T-onset temperature of the co-binder is at least 10°C, preferably at least 20°C, more preferably at least 30°C, and most preferably at least 50°C lower than the T-onset temperature of the main binder.

For the purposes of the present invention, any combination of known mineral wool binders may be used as main binder and co-binder, provided the requirements in terms of T-onset temperature and ion viscosity are met. The T-onset temperature of the co-binder should preferably be selected such that premature curing in the forming chamber is prevented. It is not necessary for the co-binder to contribute to excellent product properties. Rather it is sufficient for the co-binder to provide adequate stiffness of the mineral fibre web so as to avoid hollow-blowing during the curing process.

The thermosetting binder resins may comprise both formaldehyde-containing and formaldehyde-free, organic and inorganic binder resins.

Suitable formaldehyde-containing resins are, for instance, phenoplast-type resins (phenol-formaldehyde resins or urea-modified phenol-formaldehyde resins) and aminoplast-type resins (melamine-formaldehyde resins or urea-formaldehyde resins), or combinations thereof.

Preferred examples of formaldehyde-free binder systems are, for instance, the following:

### Binder A

A first embodiment of a formaldehyde-free polymeric binder system comprises the water-soluble reaction product of an alkanolamine with a carboxylic anhydride obtainable by reacting at least one alkanolamine with at least one carboxylic anhydride and, optionally, treating the reaction product with a base.

Preferred alkanolamines for use in the preparation of this binder system are alkanolamines having at least two hydroxy groups such as, for instance, alkanolamines represented by the formula 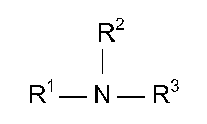 wherein R¹ is hydrogen, a C₁₋₁₀ alkyl group or a C₁₋₁₀ hydroxyalkyl group; and R² and R³ are C₁₋₁₀ hydroxyalkyl groups.

Preferably, R² and R³, independently are C₂₋₅ hydroxyalkyl groups, and R¹ is hydrogen, a C₁₋₅ alkyl group or a C₂₋₅ hydroxyalkyl group. Particularly preferred hydroxyalkyl groups are β-hydroxyalkyl groups.

Specific examples of suitable alkanolamines are diethanolamine, triethanolamine, diisopropanolamine, triisopropanolamine, methyldiethanolamine, ethyldiethanolamine, n-butyldiethanolamine, methyldiisopropanolamine, ethyl-isopropanolamine, ethyldiisopropanolamine, 3-amino-1,2-propanediol, 2-amino-1,3-propanediol and tris(hydroxymethyl)aminomethane. Diethanolamine is the currently preferred alkanolamine.

The carboxylic anhydride reactant may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred. In a particularly preferred embodiment of the invention, two different anhydrides selected from cycloaliphatic and/or aromatic anhydrides are employed. These different anhydrides are preferably reacted in sequence.

Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.

If two different anhydrides are employed, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3.

In the preparation of the binder composition, the proportion of the alkanolamine and carboxylic anhydride reactants is preferably selected such that the ratio of equivalents of amine plus hydroxy groups (NH+OH) to equivalents of carboxy groups (COOH) is at least 0.4, more preferably at least 0.6. By employing these minimum ratios, a too high excess of free unreacted acid is avoided which under specific conditions could lead to a displacement of binder in the curing oven, i.e. to a non-uniform distribution in amount of binder between the bottom and top of the mineral wool mat or web. Furthermore, high amounts of unreacted acid may increase corrosiveness.

On the other hand, the properties of the final binder composition, such as curing behaviour, durability and humidity resistance are determined by the total ratio of reactive groups present. Therefore, for optimum performance, the ratio of equivalents of amine plus hydroxy groups (NH+OH) to equivalents of carboxy groups (COOH) in the final binder composition is preferably adjusted to 2.0 or less, more preferably to 1.7 or less. Preferably, the final binder composition has an equivalent ratio of (NH+OH) / (COOH) within the range of from 0.7 to 1.55.

The reaction between the alkanolamine and carboxylic anhydride reactants is carried out in the usual manner, for instance, as described in WO 99/36368, WO 01/05725, WO 01/96460, WO 02/06178, WO 2004/007615 and WO 2006/061249, the entire contents of which is incorporated herein by reference.

The reaction temperature is generally within the range of from 50°C to 200°C. In a preferred embodiment and, in particular, when two different anhydrides are employed, the alkanolamine is first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.

If water is added after the first anhydride has reacted, either together with the second anhydride or before addition of the second anhydride or at the end of the reaction, in an amount to make the binder easily pumpable, a binder having an increased molecular weight (compared to water addition from the start) is obtained which still has a desired pumpability, viscosity, and water dilutability and contains less unreacted monomers.

In order to improve the water solubility and dilutability of the binder, a base may be added up to a pH of about 8, preferably a pH of between about 5-8, and more preferably a pH of about 6. Furthermore, the addition of a base will cause at least partial neutralization of unreacted acids and a concomitant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia (NH₃) and organic amines such as diethanolamine (DEA), triethanolamine (TEA) and dimethylethanolamine (DMEA). The base is preferably added to the reaction mixture after the reaction between the alkanol amine and the carboxylic anhydride has been actively stopped by adding water.

If appropriate, an additional acid monomer may be employed in the reaction and is preferably added to the reaction mixture before addition of the anhydride reactant. Specific examples of suitable acid monomers are di-, tri- and polycarboxylic acids such as adipic acid, citric acid, sebacic acid, azelaic acid, succinic acid, tartaric acid, trimellitic acid, pyromellitic acid and styrene-maleic acid.

Furthermore, one or more polycarboxy crosslinking agents may be added after termination of the reaction and, optionally, together with the base. Suitable polycarboxy crosslinking agents are, e.g., homopolymers and copolymers of acidic monomers such as acrylic acid, alkylacrylic acid (e.g. methacrylic acid) and maleic acid, and copolymers of such acidic monomers and acrylates. The weight percentage of these polycarboxy crosslinking agents is at least 0.5, preferably at least 10 wt.%, and up to 50, preferably up to 30 wt.%, more preferably up to 15 wt.%, based on the binder composition.

### Binder B

A second embodiment of a formaldehyde-free polymeric binder system is an aqueous binder composition comprising:
(a) a polyacid component having acid groups, or anhydride or salt derivatives thereof; and
(b) a polyhydroxy component having hydroxyl groups;
wherein the pH of the binder composition is greater than about 7 and is preferably within the range of from about 7 to about 10.

A binder system according to this second embodiment is described in WO 2005/087837, the entire disclosure of which is incorporated herein by reference.

### Binder C

A third embodiment of a formaldehyde-free polymeric binder system is a binder composition comprising a polycarboxy polymer (especially a polyacrylic acid polymer), a polyhydroxy crosslinking agent, and a surfactant selected from the group consisting of cationic surfactants, amphoteric surfactants, nonionic surfactants, and mixtures thereof.

A binder system according to this third embodiment is described in US-A-2004/0152824, the entire disclosure of which is incorporated herein by reference.

### Other MMVF binders

Other thermosetting MMVF binders suitable as either the main or co-binders in accordance with the present invention are disclosed, for instance, in the following patent publications, the entire disclosure of which is incorporated herein by reference.
Epoxy-based binder resins such as described, e.g., in WO 2004/07395 and WO 2005/044750;
Polyacryl/polyamine-based binder resins such as described, e.g., in US 2007/173588;
Polyketal-based binder resins such as described, e.g., in WO 2007/044632;
Inorganic sol-gel-type binders such as described, e.g., in EP-A-1 292 384;
Blocked isocyanates;
Organically modified water glass;
Isocyanate-modified water glass;
Isocyanate-modified inorganic binders such as described, e.g., in DE-A-2359606.

### Other Components of Binder Composition

The binder compositions according to the present invention may additionally comprise one or more conventional binder additives. These include, for instance, curing accelerators such as, e.g., β-hydroxyalkylamides; the free acid and salt forms of phosphoric acid, hypophosphorous acid, phosphonic acid, citric acid and adipic acid. Other strong acids such as boric acid, sulphuric acid, nitric acid and p-toluenesulphonic acid may also be used, either alone or in combination with the just mentioned acids, in particular with phosphoric, hypophosphorous acid or phosphonic acid. Other suitable binder additives are silane coupling agents such as γ-aminopropyltriethoxysilane; thermal stabilizers; UV stabilizers; emulsifiers; surface active agents, particularly nonionic surfactants; biocides; plasticizers; anti-migration aids; coalescents; fillers and extenders such as carbohydrates, clay, silicates and magnesium hydroxide; pigments such as titanium dioxide; hydrophobizing agents such as fluorinated compounds, mineral oils and silicone oils; flame retardants; corrosion inhibitors such as thiourea; urea; antifoaming agents; antioxidants; and others.

These binder additives and adjuvants may be used in conventional amounts generally not exceeding 20 wt.% of the binder solids. The amount of curing accelerator in the binder composition is generally between 0.05 and 5 wt.%, based on solids.

### Final Binder Composition

The aqueous binder composition preferably has a solids content of from 1 to 20 wt.%. In order to achieve adequate application properties and, in particular, spraying properties, the viscosity of the binder composition may be adjusted. This is accomplished, for instance, by controlling the type and/or concentration of binder components in the aqueous binder system or by dispersing or emulsifying the binder in water.

The combined binders are normally applied in an amount of 0.1 to 10 %, preferably 0.2 to 8 % by weight, of the bonded mineral fibre product on a dry basis.

### Mineral fibre product

The mineral fibres employed may be any of man-made vitreous fibres (MMVF), glass fibres, ceramic fibres, basalt fibres, slag wool, rock wool, stone wool and others.

Suitable fibre formation methods and subsequent production steps for manufacturing the mineral fibre product are those conventional in the art including but not limited to those discussed hereinbefore in the "Background of the Invention". Generally, the different binders are sprayed immediately after fibrillation of the mineral melt on to the airborne mineral fibres. Suitable spraying devices are, e.g., nozzles. In a cascade spinning apparatus having four spinning wheels, the main binder may, for instance, be sprayed from the central diffusers of wheels 2 and 3 plus nozzle ring and the co-binder from the central diffuser of wheel 4.

The spray-coated mineral fibre web is generally cured in a curing oven by means of a hot air stream. The hot air stream may be introduced into the mineral fibre web from below, or above or from alternating directions in distinctive zones in the length direction of the curing oven. Typically, the curing oven is operated at a temperature of from about 150°C to about 350°C. Preferably, the curing temperature ranges from about 200 to about 300°C. Generally, the curing oven residence time is from 30 seconds to 20 minutes, depending on, for instance, the product density.

If desired, the mineral wool web may be subjected to a shaping process before curing. The bonded mineral fibre product emerging from the curing oven may be cut to a desired format. e.g., in the form of a batt.

Thus, the mineral fibre products produced may, for instance, have the form of mats, batts, slabs, sheets, plates, strips, rolls, granulates and other shaped articles. In accordance with the present invention, it is also possible to produce composite materials by combining the bonded mineral fibre product with suitable composite layers or laminate layers such as, e.g., metal, glass surfacing mats and other woven or non-woven materials.

The following examples are intended to further illustrate the invention without limiting it.

### Netzsch Test

In the examples, DEA measurements were carried out on a Netzsch DEA 230/1 Epsilon using the following sensor supplied by Netzsch Gerätebau GmbH: IDEX sensor, 35 cm, made of polyimide. 175 µl of the 20% solids binder sample to be tested is placed on the sensor area using an automatic pipette and the sample is heated to 300°C with a constant rate of 5°C/min. During the measurement, the ion viscosity was recorded at a frequency of 3000 Hz.

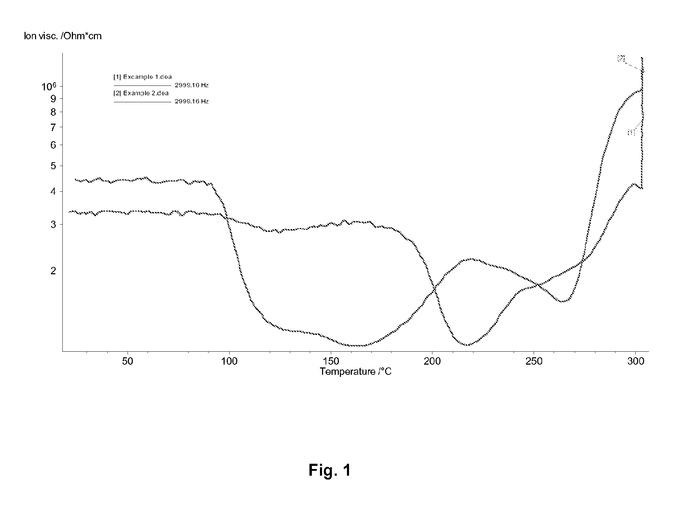

An example of a DEA curve is presented in Fig. 1

### Example 1

### Preparation of binder based upon an alkanolamine acid-anhydride reaction product

158 g of diethanolamine are placed in a 1-litre glass reactor provided with a stirrer and a heating/cooling jacket. The temperature of the diethanolamine is raised to 60°C whereafter 91 g of tetrahydrophthalic anhydride are added. After raising the temperature and keeping it at 130°C, a second portion of 46 g of tetrahydrophthalic anhydride is added followed by 86 g of trimellitic anhydride. After reacting at 130°C for 1 hour, the mixture is cooled to 95°C and 210 g of water added and the mixture stirred for 1 hour. After cooling to ambient temperature, the obtained resin is ready for use.

A binder is made using the obtained resin by adding ammonia to pH 6.5 as well as 2% of hypophosphorous acid. After dilution to 20% solids with water, a DEA measurement was performed

### Example 2

### Preparation of binder based upon polyacrylic acid

A commercially available acrylic based binder from Rohm and Haas Aquaset series: Aquaset® 600 was used for the test. After having been diluted with water to 20% solids, a DEA measurement was performed

### Example 3

### Preparation of a epoxy based binder

A commercially available epoxy resin of the glycidyl ether type from UPPC: Polypox® E 260 W was used for the test. The epoxy was mixed with dicyandiamide in an amount corresponding to 11 g/100 g epoxy. After dilution to 20% solids with water, a DEA measurement was performed.

### Example 4

### Preparation of a phenol formaldehyde based binder

A commercially available urea modified phenol formaldehyde resin from Hexion 1764K was used for the test. To the phenolic resin was added 9% of a 25% ammonia solution and ammonium sulphate in an amount corresponding to neutralisation of all catalyst. After dilution with water to 20% solids, a DEA measurement was performed

In the table below combinations of main and co-binders according to the invention derived from the examples are listed

| Co-binder | Main binder | T-onset Co-binder °C | T-onset Main binder °C | Ion viscosity ratio Co-binder/Main binder at T-onset for Main binder |
|---|---|---|---|---|
| Ex.2 | Ex. 1 | 167 | 217 | 2 |
| Ex.3 | Ex. 1 | 93 | 217 | 39 |
| Ex.4 | Ex. 1 | 144 | 217 | >1000 |
| Ex.3 | Ex.2 | 93 | 167 | 11 |
| Ex.4 | Ex.2 | 144 | 167 | 325 |
| Ex.3 | Ex.4 | 93 | 144 | 23 |

### Example 5

### Preparation of resin for use as main resin

2800 kg of diethanolamine are transferred to a 10 m3 reactor and heated to 60°C. Then 1560 kg of tetrahydrophthalic anhydride are added. After raising the temperature and keeping it at 130°C, a second portion of 780 kg of tetrahydrophthalic anhydride is added followed by 1560 kg of trimellitic anhydride. After reacting at 130°C for 1 hour, the mixture is cooled to 95°C, water added and the mixture stirred for 1 hour. After further cooling to ambient temperature, a resin according Example 1 is obtained. The obtained resin has a solids content of 57.9%

### Preparation of main binder

From the above resin a main binder was made by addition of 200 litres of 25% ammonia solution per ton solids resin, 2% of hypophophorous acid, based on solids, and 1.4% of a γ-aminopropyltriethoxy silane, based on solids. Finally, the binder was diluted with water to 15% solids

### Preparation of co-binder

As co-binder was used an acrylic-based binder according to Example 2. To the binder were added ammonia to pH 6.5 and 1,4% of a γ-aminopropyltriethoxy silane, based on solids. Finally, the binder was diluted with water to 15% solids.

### Factory trial

Using the main binder and co-binder described above a factory trial was carried out with the main binder dosed on the central diffusers of spinning wheels 2 and 3 and the nozzle ring of a cascade spinning apparatus and the co-binder dosed on the central diffuser of wheel 4. The proportion of co-binder to main binder was adjusted so that the amount of co-binder was approx. 1/3 of the total binder flow. The product produced was a light product and the curing oven air temperature during the whole test was set to 290°C.

When running with the co-binder, it was possible to increase the differential pressure in the curing oven and thereby increase production capacity of the line by more than 25% without the occurrence of hollow blowing of the product based upon visual observation.

## Claims

1. A method of producing a bonded mineral fibre product which comprises:
fiberizing a mineral melt;
carrying the mineral fibres formed by means of a gas stream into a forming chamber;
applying a thermosetting binder on to the mineral fibres;
depositing the coated fibres as a mineral fibre web on a receiver means; and
transferring the mineral fibre web to a curing oven for curing of the binder and forming a bonded mineral fibre product;
the method being **characterized by** separately applying a main binder and at least one co-binder on to the mineral fibres, the T-onset temperature (temperature at which curing starts) of the co-binder being at least 10°C lower than the T-onset temperature of the main binder, and the ion viscosity of the co-binder at the T-onset temperature of the main binder being higher than the ion viscosity of the main binder.

2. The method of claim 1, wherein the co-binder has at least the same curing rate as the main binder.

3. The method of claim 2, wherein the co-binder has a higher curing rate than the main binder.

4. The method of any one of claims 1 to 3, wherein the amount of co-binder, based on solids, is 1 to 50 weight percent of the total binder.

5. The method of claim 4, wherein the amount of co-binder, based on solids, is 5 to 35 weight percent of the total binder.

6. The method of any one of claims 1 to 5, wherein the T-onset temperature of the co-binder is at least 20°C lower than the T-onset temperature of the main binder.

7. The method of claim 6, wherein the T-onset temperature of the co-binder is at least 30°C lower than the T-onset temperature of the main binder.

8. The method of claim 7, wherein the T-onset temperature of the co-binder is at least 50°C lower than the T-onset temperature of the main binder.

9. The method of any one of claims 1 to 8, wherein the main binder is a urea-modified phenol formaldehyde resin and the co-binder is an epoxy resin.

10. The method of any one of claims 1 to 8, wherein the main binder is an alkanolamine/carboxylic acid anhydride reaction product and the co-binder is an acrylic resin.

11. The method of any one of claims 1 to 8, wherein the main binder is an alkanolamine/carboxylic acid anhydride reaction product and the co-binder is an epoxy resin.

12. The method of any one of claims 1 to 11, wherein fibre formation is carried out by means of a spinning cup process or a cascade rotor process.

13. The method of any one of claims 1 to 12, wherein curing is effected by means of a hot-air stream introduced into the mineral fibre web.

14. A bonded mineral fibre product produced by a method according to any one of claims 1 to 13.

15. An article produced from the bonded mineral fibre product of claim 14.

16. An article according to claim 15 in the form of a mat, batt, slab, sheet, plate, strip, roll, granulate or other shaped article or composite.
